# FASCICULE DE BREVET EUROPEEN

(11) **EP 3 239 581 B1**
(45) Date de publication et mention de la délivrance du brevet: **26.06.2019**
(21) Numéro de dépôt: 17173687.9
(22) Date de dépôt: 11.02.2015
(51) Int. Cl.: F16L 37/084

(54) **COULISSEAU DE VERROUILLAGE POUR CONNECTEUR FLUIDIQUE**
VERSCHLUSSSCHIEBER FÜR FLUID-ANSCHLUSS
LOCKING SLIDE FOR FLUID CONNECTOR

(30) Priorité: 14.02.2014 FR 1451186
(43) Date de publication de la demande: 01.11.2017
(62) Demande divisionnaire de: 15709243.8
(73) Titulaire: SARTORIUS STEDIM FMT SAS, 13400 Aubagne (FR)
(72) Inventeur: GIBELIN, Jérémy, 83870 Signes (FR); BLAKE, Florian, 13600 LA CIOTAT (FR)
(74) Mandataire: Derambure Conseil

(56) Documents cités:
- US-A- 5 104 158
- US-A- 5 683 117
- US-A1- 2008 224 469
- US-B1- 6 206 435

## Description

L'invention concerne les connecteurs fluidiques, en particulier pour les connexions ou raccordements fluidiques permettant de raccorder un connecteur femelle à un connecteur mâle, en vue de raccorder une conduite fluide à une autre conduite ou à un récipient, dans le domaine des applications biopharmaceutiques.

Plus précisément, on utilise, dans le domaine biopharmaceutique, des conduites ou tubes souples, et des récipients ou contenants, qui servent à transporter et contenir des substances biopharmaceutiques diverses, avec le plus souvent des précautions d'asepsie nécessaires.

Dans le domaine des applications biopharmaceutiques, les fluides sont transportés et stockés à basse pression, c'est-à-dire généralement en dessous de 10 bars et le plus souvent en dessous de 2 bars, voire préférentiellement à une pression proche de la pression atmosphérique.

Dans le cas d'utilisation de certaines substances, il peut être nécessaire de garantir momentanément des conditions de stérilité suffisantes après que le raccordement des différents composants (conduites et/ou récipients) ait été effectué, tout en gardant la possibilité de désaccoupler le raccordement quand cela est nécessaire.

À cette fin, il est commode d'utiliser des raccordements mâle-femelle à verrouillage, susceptibles d'être déverrouillés par une action spécifique.

Par ailleurs, ce genre de raccordement doit être obtenu par un accouplement simple et rapide. En pratique, on privilégie les solutions où l'accouplement est réalisé par un mouvement de translation axiale sans rotation pour l'insertion du connecteur mâle dans le connecteur femelle.

Il est connu, par exemple du document WO2010/011883, d'utiliser une pièce de verrouillage, formée comme un coulisseau déplaçable transversalement, cette pièce de verrouillage étant formée avec une plaque disposée transversalement à l'axe, dotée d'un orifice axial au travers duquel passe le connecteur mâle, et une partie formant bouton-poussoir permettant par une pression manuelle d'obtenir le déverrouillage du raccordement. La plaque transversale et le bouton-poussoir sont formés dans une seule et même pièce en forme de « L ». De plus, il est prévu, sous le bouton-poussoir, une patte flexible formée intégralement dans la même pièce, qui rappelle le coulisseau vers une position décentrée par rapport à l'axe, cette position formant la position de verrouillage retenant le connecteur maie dans le connecteur femelle.

Compte tenu du fait que le bouton-poussoir et la patte flexible s'étendent à partir du plan de la plaque d'un seul côté vers l'arrière du connecteur femelle, cette disposition présente l'inconvénient suivant : l'effort exercé par la patte flexible de rappel a une résultante qui est décalée par rapport au plan médian de la plaque de verrouillage, ce qui a tendance à créer un couple de coincement de la plaque dans le logement qui la contient, ce qui peut conduire à un retour de la plaque de verrouillage mal assuré vers la position de verrouillage.

De façon similaire, l'effort exercé par un utilisateur sur le bouton-poussoir est décalé par rapport au plan de la plaque de verrouillage, ce qui peut conduire à des difficultés de déverrouillage.

Il existe par conséquent le besoin de proposer une amélioration destinée à pallier, au moins en partie, l'inconvénient précité de l'art antérieur connu.

A cet effet, il est proposé un coulisseau de verrouillage tel que défini dans la revendication 1, convenant pour être utilisé comme un élément de verrouillage inséré dans un connecteur femelle.

Selon un autre aspect, on prévoit un connecteur femelle, pour raccordement fluide, apte et destiné à recevoir un connecteur mâle ayant un rebord annulaire extérieur de retenue, le connecteur femelle comprenant un corps avec un alésage d'axe X, et un logement formant glissière (par exemple fente) s'étendant généralement dans un plan transversal YZ perpendiculaire à l'axe, le logement comprenant deux rainures latérales parallèles et le logement étant débouchant à au moins une de ses extrémités selon la direction de la glissière Z, formant une embouchure du logement,
le connecteur femelle comprenant un coulisseau de verrouillage, distinct du corps, apte à être inséré dans le logement et déplaçable entre une première position dite de verrouillage et une deuxième position dite de déverrouillage,
le coulisseau de verrouillage comprenant une plaque de verrouillage avec un orifice central au travers duquel le connecteur mâle peut passer, et un bouton d'actuation formé intégralement avec la plaque, configuré pour pouvoir être poussé vers l'axe afin de déverrouiller la connexion, avec une portion de retenue, appartenant à la plaque de verrouillage et opposée au bouton d'actuation, qui est apte, dans la première position, à venir buter sur le rebord annulaire extérieur de retenue pour empêcher le retrait du connecteur mâle,
le coulisseau de verrouillage comprenant au moins une patte flexible formée intégralement avec le coulisseau, la patte flexible rappelant le coulisseau vers la première position, et étant apte à fléchir pour laisser la plaque se déplacer vers la deuxième position,
caractérisé en ce que la patte flexible porte de part et d'autre de l'embouchure du logement selon la direction axiale X.

De sorte que l'effort de rappel est équilibré selon X et ne crée pas de couple qui pourrait avoir tendance à coincer la plaque de verrouillage. La résultante des forces de rappel coïncide substantiellement avec le plan médian de la plaque de verrouillage, moyennant quoi on peut garantir le bon coulissement du coulisseau vers la position de verrouillage.

Selon une réalisation, le corps présente dans la zone du logement un anneau avant et un anneau arrière, qui encadrent le logement, l'embouchure étant interposée entre un bord avant de l'anneau avant et un bord arrière de l'anneau arrière, la patte flexible portant à la fois sur le bord avant et sur le bord arrière ; de sorte que l'on utilise la forme naturelle annulaire du corps du connecteur femelle comme surfaces de portée pour l'extrémité libre des pattes flexibles.

Selon une réalisation, le coulisseau comprend deux pattes flexibles disposées symétriquement par rapport au plan XZ ; de sorte que chacune des pattes flexibles produit un effort de rappel, ce qui est avantageusement équilibré symétriquement vis-à-vis du plan XZ ; en outre une redondance est ainsi créée, et en cas de rupture ou de détérioration d'une des pattes, l'autre continue à fournir un effort de rappel vers la position de verrouillage.

Selon une réalisation, chacune des pattes flexibles présente une courbure orientée à l'opposé du bouton-poussoir ; de sorte que l'effet ressort procuré par une telle forme peut être bien maîtrisé ; de plus, chacune des pattes flexibles a de préférence une section qui diminue depuis son emplanture jusqu'à son extrémité libre; ce qui représente une forme optimale pour une patte en porte-à-faux.

Selon une réalisation, les pattes flexibles sont agencées sous le bouton d'actuation, de préférence interposées entre le bouton d'activation et une bordure supérieure de l'orifice principal; moyennant quoi, cela permet d'offrir une protection naturelle des pattes flexibles pour éviter qu'elles ne soient endommagées par un contact avec un objet extérieur. On évite aussi des risques d'accrochage avec d'autres éléments ou des objets extérieurs lors de la manipulation des conduites et contenants biopharmaceutiques.

Selon une réalisation, le logement débouche aux deux extrémités selon Z et est symétrique par rapport au plan XY ; moyennant quoi on peut insérer le coulisseau de verrouillage indifféremment depuis chacun des côtés du logement formant glissière.

Selon une réalisation, la portion de retenue comprend une rampe pour faciliter le déplacement du coulisseau vers la position centrée axialement lors de l'insertion du connecteur mâle. Ce qui permet d'obtenir un effort d'insertion faible, avec ou sans chanfrein sur l'extrémité avant du connecteur mâle.

Selon une réalisation, le logement est dissymétrique par rapport au plan YZ de sorte que l'on ne peut insérer le coulisseau que dans le sens où la rampe est ouverte vers l'avant en direction du connecteur mâle. On évite ainsi de pouvoir monter le coulisseau à l'envers dans le logement.

De préférence, on prévoit un ergot saillant en direction axiale en partie basse du coulisseau, prévu pour coopérer avec au moins une encoche ménagée dans la paroi avant du logement formant glissière.

Selon une réalisation, la plaque de verrouillage comprend des saillies permettant de retenir le coulisseau dans le logement dans la direction de la glissière Z ; moyennant quoi, une fois que le coulisseau a été installé dans le logement, ces saillies empêchent son extraction vers le haut, il ne peut être poussé que vers le bas au moyen du bouton d'activation.

Selon une réalisation, lequel la patte flexible présente une largeur selon X comprise entre 2 et 3 fois la largeur selon X de la fente, le bouton d'activation présente une largeur selon X comprise entre 2 et 5 fois la largeur selon X de la fente. Ceci permet d'optimiser l'effort produit par les pattes de rappel vers la position de verrouillage, en fonction de la largeur choisie pour les pattes flexibles. Concernant la largeur du bouton d'activation, on optimise ainsi l'ergonomie de déverrouillage selon la largeur choisie.

Selon une réalisation, le bouton est bombé avec un rayon de courbure voisin du rayon de courbure du corps du connecteur femelle et le bouton comprend des portions latérales plus proches de l'embouchure selon Z qui forment une butée au mouvement de descente du coulisseau ; on forme ainsi un bouton d'activation peu encombrant radialement et on procure une butée de mouvement par un moyen très simple.

Selon une réalisation, le coulisseau présente une double symétrie XZ et YZ ; si la forme des portions de rampe du connecteur mâle le permet, on peut ainsi proposer un coulisseau qui peut être inséré dans le logement indifféremment dans les deux sens possibles avant/arrière, sans nécessité d'avoir recours à un détrompage.

Selon une réalisation, le corps du connecteur femelle est réalisé dans une première matière plastique biocompatible et le coulisseau de verrouillage est réalisé dans une seconde matière plastique ; de sorte que l'on peut optimiser les matériaux respectifs du connecteur femelle et du coulisseau de verrouillage ; en particulier on peut choisir comme seconde matière plastique un matériau aux performances mécaniques optimisées, concernant un compromis rigidité versus élasticité pour les pattes flexibles ; En outre, l'optimisation respective des deux matières permet de fabriquer ces composants avec des coûts de revient particulièrement avantageux.

On décrit maintenant brièvement les figures des dessins.
La figure 1 est une vue en perspective du dispositif de connexion conforme à la présente invention.
La figure 2 est une vue en coupe axiale du dispositif de connexion de la figure 1, en position accouplée, selon la ligne de coupe II-II visible sur la figure 5.
La figure 3 est une vue en perspective du coulisseau de verrouillage.
La figure 4 est vue en perspective d'une coupe transversale du dispositif de connexion.
La figure 5 montre une coupe transversale du dispositif de connexion.
La figure 6 montre une vue de dessus du connecteur femelle sans le coulisseau de verrouillage.
La figure 7 montre une vue partielle en perspective, illustrant les pattes flexibles et leur zones d'appui,
Les figures 8A et 8B représentent deux variantes de profil de la portion avant du connecteur mâle avec un coulisseau de verrouillage respectivement symétrique et dissymétrique par rapport au plan YZ.
Les figures 9A, 9B et 9C illustrent une autre variante avec un détrompage de position affectant du coulisseau de verrouillage et le logement dans le connecteur femelle.

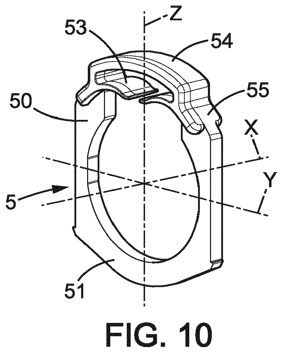

La figure 10 montre une vue en perspective d'une variante symétrique du coulisseau.

Ci-après un exposé détaillé de plusieurs modes de réalisation de l'invention assorti d'exemples et de référence aux dessins.

Dans l'exemple illustré, il s'agit de raccorder un connecteur femelle **1** à un connecteur mâle **2**, par un mouvement d'accouplement au cours duquel on insère le connecteur mâle dans le connecteur femelle selon une direction axiale **X.**

Pour chacun de ces connecteurs, dans le présent document, le terme '**avant**' désigne la partie la plus proche du connecteur opposé complémentaire, et le terme '**arrière**' désigne la partie la plus éloignée du connecteur opposé.

Le connecteur femelle **1** comprend dans sa portion arrière un embout tubulaire **17** destiné à recevoir un tube souple (non représenté) et dans sa portion avant une interface de couplage avec le connecteur mâle 2, ladite interface de couplage sera décrite plus bas.

De façon similaire, le connecteur mâle **2** comprend dans sa portion arrière un embout tubulaire **27** destiné à recevoir un tube souple et dans sa portion avant une interface de couplage avec le connecteur femelle, dont il sera question plus loin.

Il faut remarquer ici que le connecteur femelle et/ou le connecteur **mâle** pourraient présenter dans leurs portions arrière, à la place d'un embout de réception de tube tel que représenté, une collerette de raccord à un récipient tel que par exemple une poche souple ou rigide ou encore un filtre.

Chacun des embouts tubulaires **17,27** est de révolution autour de l'axe X, et ils comprennent chacun un ou plusieurs crans **19,29** de rétention du tube souple, et une collerette d'arrêt **18,28** sur laquelle peut venir buter le tube souple lors de son insertion sur l'embout. Comme connu en soi, on peut ajouter un collier de serrage autour du tube souple et de l'embout.

Le connecteur mâle **2** comprend un passage axial **26** de révolution autour de l'axe, qui permet le passage du fluide transporté au travers du raccordement fluidique.

En partant de sa portion extrême avant, le connecteur mâle comprend tout d'abord un chanfrein d'entrée **25**, puis une gorge annulaire **21** destinée à recevoir un joint torique d'étanchéité **9** classique, puis une première portion intermédiaire **20** équipée de nervures longitudinales **73**, puis une partie tronconique **23** qui s'évase vers l'extérieur et vers l'arrière du connecteur mâle.

Toujours en se dirigeant vers l'arrière du connecteur, la partie tronconique **23** se prolonge par un rebord annulaire **24**, qui forme un épaulement destiné à porter sur une autre surface en contrepartie et à empêcher le retrait du connecteur mâle comme il sera vu plus loin.

En arrière du rebord annulaire anti retrait **24**, le connecteur mâle comprend une seconde portion intermédiaire **22** avec un anneau **72** équipé de quatre petits renforts **74,** ledit anneau avec ces renforts servant de moyens de préhension pour pousser le connecteur mâle en direction du connecteur femelle et servant également de butée axiale pour le mouvement d'insertion.

En arrière de l'anneau **72**, on trouve la collerette **28** et l'embout tubulaire proprement dit **27** déjà commentés.

Le connecteur femelle **1** comprend un passage axial **15** de révolution autour de l'axe, qui permet le passage du fluide transporté au travers du raccordement fluidique.

En partant de sa portion extrême arrière, le connecteur femelle 1 comprend l'embout tubulaire **17** déjà commenté, puis un corps **10** principal destiné à recevoir la portion avant du connecteur mâle, avec un alésage de diamètre légèrement supérieur au diamètre extérieur de la portion avant de la portion avant du connecteur mâle **2**, de manière à pouvoir permettre l'insertion la portion avant du connecteur mâle et de manière à pouvoir exercer une pression radiale sur le joint torique **9** pour assurer la fonction étanchéité.

En vis-à-vis de la partie tronconique **23**, le corps **10** présente une dimension intérieure qui va en s'accroîssant jusqu'à l'emplacement d'un logement **4** pour un coulisseau de verrouillage **5** dont il va être question plus loin.

En effet, dans la portion avant du connecteur femelle est agencé un logement formant glissière **4** s'étendant dans un plan transversal **YZ** perpendiculaire à l'axe **X.** En l'occurrence, le logement formant glissière se présente ici comme une fente transversale. De plus, dans l'exemple illustré cette fente débouche des deux côtés selon la direction transversale **Z** qui permet l'insertion d'un élément de verrouillage qui sera discuté plus loin.

Dans l'exemple illustré, le logement **4** comprend une première rainure **41** et une seconde de rainure **42** lesquelles se font face et sont disposées symétriquement par rapport au plan **XZ.**

Enfin, le corps **10** du connecteur femelle comprend un anneau frontal **11** qui forme l'extrémité avant et sur lequel viendra buter en fin de mouvement d'insertion l'anneau **72** du connecteur mâle. Un anneau arrière **12** s'étend de l'autre côté de la fente et forment un vis-à-vis de l'anneau frontal.

Il faut remarquer ici qu'il n'est pas strictement nécessaire que la fente 4 soit débouchante des deux côtés, en effet en variante non représentée, un des côtés pourrait être au moins partiellement fermé ce qui formerait un fond pour le logement 4 tandis que le côté opposé constituerait l'embouchure 40 par laquelle il faut insérer le coulisseau de verrouillage 5.

Le coulisseau de verrouillage **5** déjà évoqué est destiné à être inséré dans le logement **4** susmentionné du corps du connecteur femelle. Le coulisseau de verrouillage **5** est formé comme une pièce en plastique moulée comprenant une plaque de verrouillage **50**, disposée transversalement par rapport à l'axe **X** avec un orifice central **58** au travers duquel le connecteur mâle **2** peut passer.

De plus le coulisseau de verrouillage **5** comprend un bouton d'actuation **54** formé intégralement avec la plaque, configuré pour pouvoir être poussé vers l'axe afin de déverrouiller la connexion, par recentrage de l'orifice axial **58.**

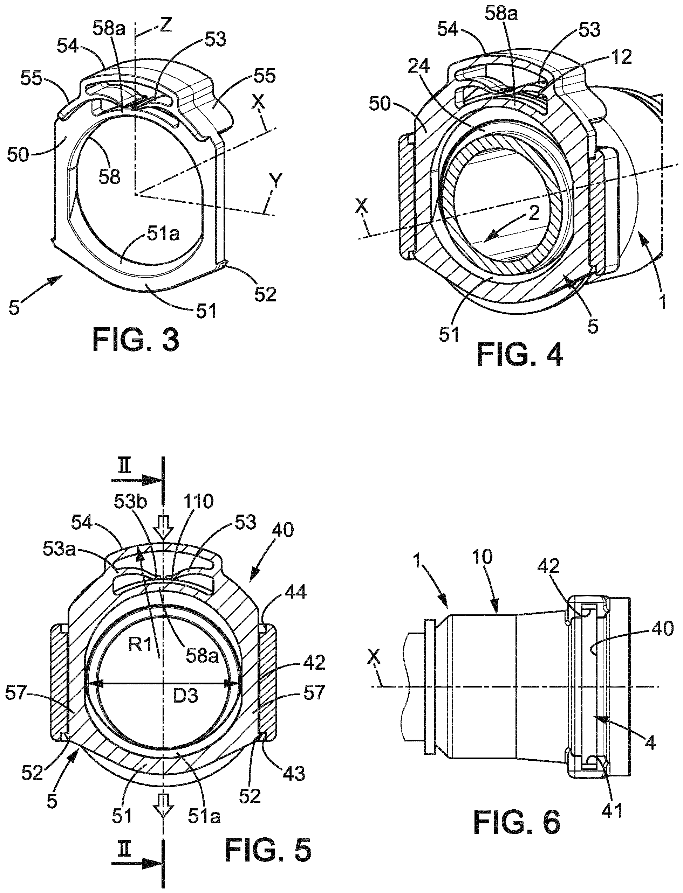

De plus le coulisseau de verrouillage **5** comprend deux pattes flexibles **53** formées intégralement avec le coulisseau, les pattes flexibles rappelant le coulisseau vers la première position, dite position de verrouillage, avec un décentrage de l'orifice **58** par rapport à X (Fig 4 et 5), le rebord annulaire 24 étant retenu par la portion de retenue 51. Les deux pattes flexibles **53** sont aptes à fléchir pour laisser la plaque de verrouillage **50** se déplacer vers la deuxième position, dite position de déverrouillage, qui correspond à un recentrage de l'orifice chiffre 58 est un décaissement relatif du rebord annulaire 24 par rapport la portion de retenue 51.

Avantageusement, les deux pattes flexibles **53** sont disposées symétriquement par rapport au plan XZ. De plus, les pattes flexibles sont agencées sous le bouton d'actuation **54**. De préférence, elles sont interposées entre le bouton d'activation **54** et une bordure supérieure **58a** de l'orifice principal **58**. En outre, on remarque que chacune des pattes flexibles **53** présente une courbure orientée à l'opposé du bouton-poussoir, c'est-à-dire recourbée vers le bas. De plus, chacune des pattes flexibles **53** a de préférence une section qui diminue depuis son emplanture **53a** jusqu'à son extrémité libre **53b**.

Avantageusement, chacune des pattes flexibles 53 porte de part et d'autre de l'embouchure **40** du logement selon la direction axiale X.

Il faut remarquer ici qu'au lieu d'avoir deux pattes flexibles, on pourrait tout aussi bien avoir une seule patte flexible **53** portant sur le corps du connecteur femelle de part et d'autre de l'embouchure avec les mêmes avantages.

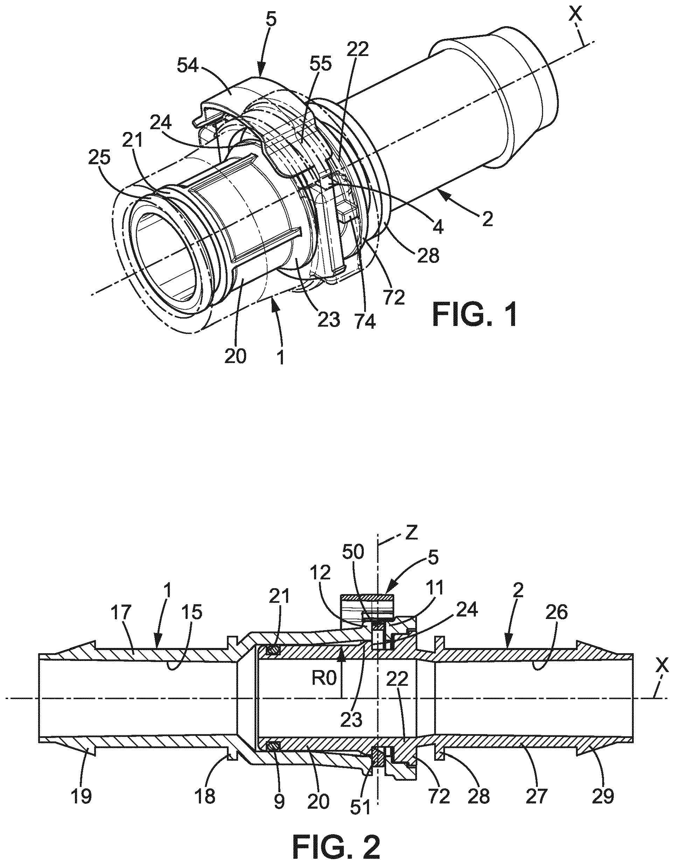

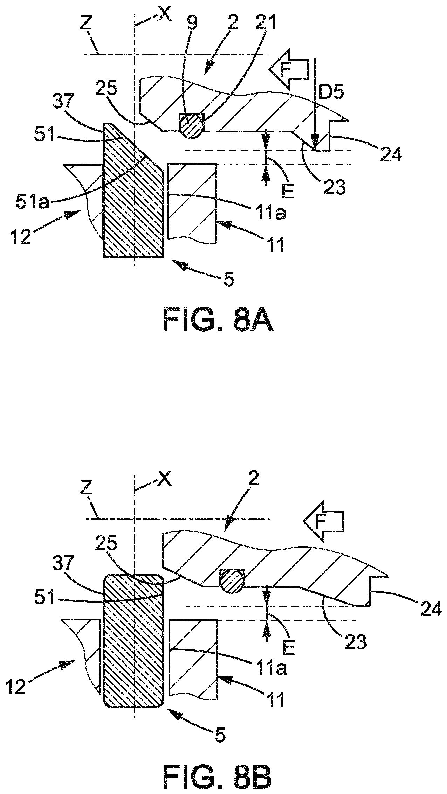

Le diamètre **D3** de l'orifice axial **58** de la plaque de verrouillage **50** est supérieur au diamètre **D5** du connecteur mâle, en périphérie du rebord annulaire **24** (Fig 8A). Toutefois, l'orifice axial 58 peut se trouver désaxé, en l'occurrence déplacé vers le haut, ce qui conduit à une configuration de verrouillage de la connexion (Fig 2), en première position.

Préalablement à l'insertion du connecteur mâle, le coulisseau de verrouillage **5** peut être maintenu dans une position d'attente à l'intérieur du logement par différents moyens. Dans l'exemple illustré, le coulisseau de verrouillage est maintenu dans le logement par deux formes en saillie **52**, agencées substantiellement aux extrémités basses (opposées à la position du bouton-poussoir) des parois latérales **57** de la plaque de verrouillage. Les deux formes en saillie **52**, que l'on pourrait aussi appeler crochets, becs ou griffes s'étendent vers l'extérieur généralement selon la direction **Y**. Il est prévu des formes en creux 43 en vis-à-vis, à l'extrémité inférieure des rainures **41, 42** du logement, ces formes en creux, en particulier celles référencées **43** étant destinées à recevoir les formes en saillie **52** du coulisseau lorsque celui-ci arrive dans la position l'orifice axial **58** est sensiblement centrée sur l'axe **X**.

La flexibilité du coulisseau **5** ainsi que des formes en saillie **52** permet, avant l'accouplement du connecteur mâle dans le connecteur femelle, l'insertion du coulisseau de verrouillage selon la direction **Z** depuis l'embouchure supérieure **40** du logement.

Ainsi, une fois que le coulisseau a été installé dans le logement, ces saillies **52** empêchent son extraction vers le haut, il ne peut être poussé que vers le bas au moyen du bouton d'activation **54.**

Avantageusement, la portion de retenue inférieure **51** comprend une forme de rampe **51a**, autrement dit un biseau, destiné à faciliter le mouvement d'insertion du connecteur mâle qui doit déplacer le coulisseau vers le bas jusqu'à ce que le rebord annulaire de rétention **24** ait dépassé la portion de retenue **51**, ce qui provoque alors la remontée du coulisseau sous l'effet des forces de rappel des pattes flexibles **53**. Le connecteur femelle **1** et le connecteur mâle **2** peuvent être obtenus par moulage d'une première matière plastique, en particulier des matières plastiques bio compatibles avec les substances biopharmaceutiques visées, par exemple polypropylène, du polyéthylène, du polycarbonate, du polysulfone, polychlorure de vinylidène, polyethylenimine. On choisira de préférence le polyéthylène ou le polypropylène.

Le coulisseau de verrouillage 5 peut être lui aussi réalisé dans la même matière par exemple polybutylène téréphtalate, polypropylène, polyéthylène, polycarbonate, polyoxyméthylène; alternativement, et avantageusement dans certains cas, on pourra choisir pour le coulisseau une seconde matière plastique différente des connecteurs, typiquement du polybutylène téréphtalate ou du polycarbonate, avec des propriétés mécaniques et élastiques plus ciblées notamment en ce qui concerne l'optimisation des pattes flexibles, car en effet le coulisseau de verrouillage n'est jamais en contact avec les substances transportées dans la conduite objet du raccordement. On pourra optimiser, pour les pattes flexibles, le compromis de la rigidité par rapport à l'élasticité du second matériau. On pourra aussi prendre en compte l'évolution des qualités du matériau en fonction du vieillissement naturel ou provoqué par la lumière ou d'autres rayonnements, ou d'autres agressions physico-chimiques.

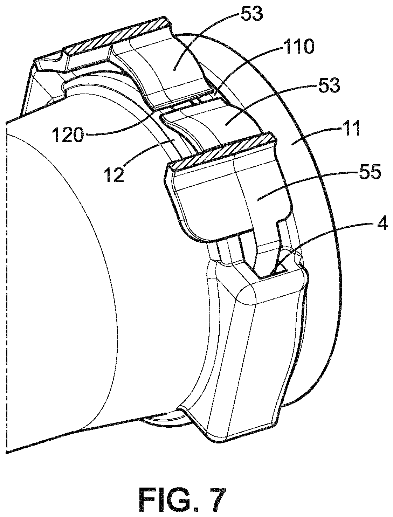

Comme illustrée à la figure 7, le corps **10** présente dans la zone du logement un anneau avant 11 et un anneau arrière 12 déjà mentionnés, qui encadrent le logement. L'embouchure 40 est interposée entre un bord avant 110 de l'anneau avant 11 et un bord arrière 120 de l'anneau arrière 12 ; la patte flexible 53 porte à la fois sur le bord avant 110 et sur le bord arrière 120.

On remarque aussi que le bouton 54 est bombé avec un rayon de courbure R1 voisin du rayon de courbure R0 du corps du connecteur femelle. Le bouton-poussoir **54** comprend des portions latérales **55** plus proches de l'embouchure selon Z qui forment une butée au mouvement de descente du coulisseau 5, de manière à éviter que la bordure supérieure 58a vienne gêner le retrait du connecteur mâle, en cas d'appui à fond sur le bouton-poussoir.

Comme illustrée à la figure 8A, pour faciliter la déflection du coulisseau au moment de l'insertion, par exemple dans le cas où les rampes d'entrée **25,23** sont assez raides, la face biseautée **51a** sur la face avant de la portion de retenue 51 permet de diminuer les efforts d'insertion **F** et de faciliter la descente du coulisseau verrouillage. En revanche, sur le côté opposé de la section du coulisseau (face arrière **37**), on conserve un profil droit afin que le rebord extérieur **24** du connecteur mâle porte bien à plat sur la face arrière **37** du coulisseau. Ainsi, une traction sur l'embout mâle après accouplement n'aura pas tendance à faire descendre le coulisseau, les efforts sont transmis par l'interface entre le rebord annulaire **24** et la face arrière **37** du coulisseau, puis par l'autre face du coulisseau qui porte sur la face **11a** de l'anneau avant **11**.

On remarque un jeu fonctionnel **E** entre la portion avant du connecteur mâle et le diamètre intérieur de l'anneau avant **11** qui permet de garantir que le connecteur mâle y compris l'épaulement **24** passe au-delà de l'anneau avant **11** de la fente. Bien sûr, un jeu doit aussi être prévu comme déjà mentionné entre l'orifice axial 58 et le diamètre hors tout **D5** de la portion avant du connecteur mâle.

Comme illustrée à la figure 8B, dans le cas où la partie avant du connecteur mâle présente des rampes d'entrée **25,23** à faible pente, on peut utiliser une section de portion de retenue **51** symétrique par rapport au plan **YZ**. Dans ce cas de figure, on peut former le coulisseau avec une double symétrie, à savoir une symétrie par rapport aux plans **XZ** et **YZ.** Dans ce cas de figure, aucun risque d'erreur n'existe lors du montage du coulisseau à l'intérieur du logement **4**.

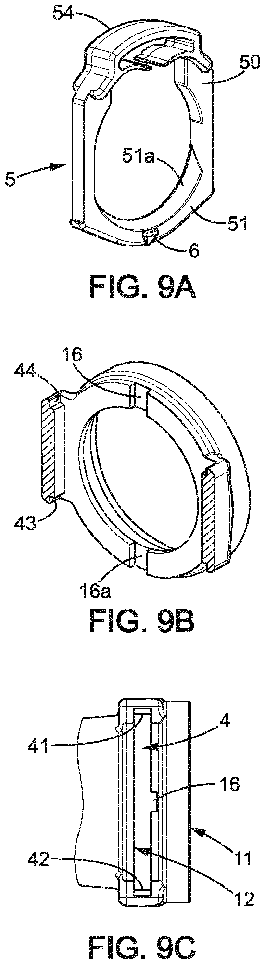

Selon une caractéristique optionnelle, illustrée aux figures 9A, 9B, 9C, on peut prévoir une fonction de détrompage pour garantir le sens de montage du coulisseau à l'intérieur du logement **4**. En particulier, lorsque qu'on utilise un profil de section de la portion de retenue coulisseau dissymétrique (rampe **51a**), il faut garantir que la portion biseautée est placée du côté de l'insertion du connecteur mâle.

À cette fin, un ergot **6** est agencé dans la zone centrale de la portion de retenue et s'étend en direction de l'axe **X.** Deux encoches **16,16A** formées de façon complémentaire à l'ergot **6** susmentionné (voire plus larges), sont ménagées dans le plan médian **XZ** de la fente, une en haut et une en bas. Ainsi, on ne peut pas insérer le coulisseau de verrouillage à l'envers avec la partie biseautée dirigée du mauvais côté, car l'ergot buterait sur l'anneau arrière **12** dépourvu d'encoche.

On remarque que dans l'exemple illustré, le connecteur mâle peut tourner à l'intérieur du connecteur femelle autour de X, il n'y a pas de position en orientation particulière pour insérer le connecteur mâle dans le connecteur femelle.

Toutefois, il n'est pas exclu de prévoir un dispositif anti rotation qui peut par exemple être agencé entre les petits renforts de l'anneau **72** du connecteur mâle et l'anneau frontal **11** du connecteur femelle.

## Revendications

1. Coulisseau de verrouillage (5), moulé en matière plastique, convenant pour être utilisé comme un élément de verrouillage inséré dans un connecteur femelle (1) lequel comprend un corps (10) avec un alésage d'axe X, et un logement formant glissière (4) s'étendant généralement dans un plan transversal YZ perpendiculaire à l'axe, le logement comprenant deux rainures latérales (41,42) parallèles et le logement étant débouchant à au moins une de ses extrémités selon la direction de la glissière Z, formant une embouchure (40) du logement, le coulisseau de verrouillage étant destiné à être inséré dans le logement (4) par l'embouchure (40),
le coulisseau de verrouillage (5) comprenant une plaque de verrouillage (50) avec un orifice central (58) au travers duquel un connecteur mâle peut passer, et un bouton d'activation (54) formé intégralement avec la plaque, configuré pour pouvoir être poussé vers l'axe afin de déverrouiller la connexion,
le coulisseau de verrouillage comprenant au moins une patte flexible (53) formée intégralement avec le coulisseau, la patte flexible rappelant le coulisseau vers une première position dite position de verrouillage, et étant apte à fléchir pour laisser la plaque se déplacer vers une deuxième position dite position de déverrouillage,
**caractérisé en ce que** la patte flexible (53) fait saillie transversalement au plan de la plaque de verrouillage des deux côtés de la plaque de verrouillage de façon à être apte et destiné à porter de part et d'autre de l'embouchure (40) du logement selon la direction transversale au plan de la plaque de verrouillage.

2. Coulisseau selon la revendication 1, comprenant deux pattes flexibles (53) disposées symétriquement par rapport au plan XZ.

3. Coulisseau selon l'une des revendications 1 à 2, dans lequel les pattes flexibles sont agencées sous le bouton d'activation (54), de préférence interposées entre le bouton d'activation et une bordure supérieure (58a) de l'orifice principal (58).

4. Coulisseau selon l'une des revendications 1 à 3, comprenant une portion de retenue (51), appartenant à la plaque de verrouillage (50) et opposée au bouton d'activation, la portion de retenue (51) comprenant une rampe (51a) pour faciliter le déplacement du coulisseau vers la position centrée axialement lors de l'insertion d'un connecteur mâle.

5. Coulisseau selon la revendication 4, dans lequel le logement est dissymétrique par rapport au plan YZ de sorte que l'on ne peut insérer le coulisseau (5) dans le logement (4) que dans le sens où la rampe (51a) est ouverte vers l'avant en direction du connecteur mâle, et dans lequel un ergot (6) saillant en direction axiale est prévu en partie basse du coulisseau, pour coopérer avec au moins une encoche (16) ménagée dans la paroi avant du logement formant glissière.

6. Coulisseau selon l'une des revendications 1 à 5, dans lequel la plaque de verrouillage (50) comprend des saillies (52) permettant de retenir le coulisseau dans le logement dans la direction de la glissière Z.

7. Coulisseau selon l'une des revendications 1 à 6, dans lequel la patte flexible (53) présente une largeur selon X comprise entre 2 et 3 fois la largeur selon X de la fente, le bouton d'activation présente une largeur selon X comprise entre 2 et 5 fois la largeur selon X de la fente.

8. Coulisseau selon l'une des revendications 1 à 7, dans lequel le bouton (54) est bombé avec un rayon de courbure voisin du rayon de courbure du corps du connecteur femelle et le bouton d'activation (54) comprend des portions d'extrémité (55) plus proche de l'embouchure qui forment une butée au mouvement de descente du coulisseau.

9. Coulisseau selon l'une des revendications 1 à 8, dans lequel le coulisseau présente une double symétrie XZ et YZ.

10. Coulisseau selon l'une des revendications 1 à 9, dans lequel chacune des pattes flexibles (53) présente une courbure orientée à l'opposé du bouton d'activation (54).

## Patentansprüche

1. Aus Kunststoffmaterial geformter Verschlussschieber (5), der geeignet ist, als ein in einer Verbindungsbuchse (1) eingesetztes Verriegelungselement verwendet zu werden, wobei die Verbindungsbuchse (1) einen Körper (10) mit einer Bohrung in X-Achse und eine führungsbahn-bildende Aufnahme (4) aufweist, die sich allgemein in einer zur Achse senkrechten transversalen YZ-Ebene erstreckt, wobei die Aufnahme zwei parallele seitliche Rillen (41, 42) aufweist und die Aufnahme an mindestens einem ihrer Enden gemäß der Richtung der Führungsbahn Z offen ist, um einen Mund (40) der Aufnahme zu bilden, wobei der Verschlussschieber über den Mund (40) in die Aufnahme (4) einzusetzen ist,
wobei der Verschlussschieber (5) eine Verriegelungsplatte (50) mit einer zentralen Öffnung (58), durch die ein Verbindungsstecker hindurchgeführt werden kann, und eine integral mit der Platte gebildete Aktivierungstaste (54) aufweist, die konfiguriert ist, hin zur Achse gedrückt zu werden, um die Verbindung zu entriegeln,
wobei der Verschlussschieber mindestens eine integral mit dem Schieber gebildete flexible Lasche (53) aufweist, wobei die flexible Lasche den Schieber hin zu einer ersten Position, Verriegelungsposition genannt, rückstellt und fähig ist, sich zu biegen, um die Platte sich hin zu einer zweiten Position, Entriegelungsposition genannt, verschieben zu lassen,
**dadurch gekennzeichnet, dass** die flexible Lasche (53) von zwei Seiten der Verriegelungsplatte transversal bezüglich der Ebene der Verriegelungsplatte vorsteht, derart, um fähig und vorgesehen zu sein, beiderseits des Munds (40) der Aufnahme in der bezüglich der Verriegelungsplatte transversalen Richtung zu tragen.

2. Schieber nach Anspruch 1, aufweisend zwei flexible Laschen (53), die symmetrisch bezüglich der XZ-Ebene angeordnet sind.

3. Schieber nach einem der Ansprüche 1 bis 2, in welchem die flexiblen Laschen unterhalb der Aktivierungstaste (54), vorzugsweise zwischen der Aktivierungstaste und einem oberen Rand (58a) der Hauptöffnung (58), angeordnet sind.

4. Schieber nach einem der Ansprüche 1 bis 3, aufweisend einen Rückhalteabschnitt (51), der Teil der Verriegelungsplatte (50) ist und an der der Aktivierungstaste gegenüberliegenden Seite angeordnet ist, wobei der Rückhalteabschnitt (51) eine Rampe (51a) aufweist, um bei Einführen eines Verbindungssteckers die Verschiebung des Schiebers hin zu der axial zentrierten Position zu erleichtern.

5. Schieber nach Anspruch 4, in welchem die Aufnahme unsymmetrisch bezüglich der YZ-Ebene ist, so dass man den Schieber (5) nur in der Richtung in die Aufnahme (4) einsetzen kann, in der die Rampe (51a) nach vorn in Richtung des Verbindungssteckers offen ist, und in welchem eine in axialer Richtung vorspringende Nase (6) im unteren Teil des Schiebers vorgesehen ist, um mit mindestens einer Kerbe (16), die in der vorderen Wand der führungsbahn-bildenden Aufnahme ausgespart ist, zusammenzuwirken.

6. Schieber nach einem der Ansprüche 1 bis 5, in welchem die Verriegelungsplatte (50) Vorsprünge (52) aufweist, die erlauben, den Schieber in der Richtung der Führungsbahn Z in der Aufnahme zurückzuhalten.

7. Schieber nach einem der Ansprüche 1 bis 6, in welchem die flexible Lasche (53) eine Breite in X-Richtung hat, die zwischen zwei bis drei Mal die Breite des Spalts in X-Richtung ist, und die Aktivierungstaste eine Breite in X-Richtung hat, die zwischen 2 bis 5 Mal die Breite des Spalts in X-Richtung ist.

8. Schieber nach einem der Ansprüche 1 bis 7, in welchem die Taste (54) eine Krümmung hat, deren Krümmungsradius annähernd dem Krümmungsradius des Körpers der Verbindungsbuchse entspricht, und die Aktivierungstaste (54) näher an dem Mund angeordnete Endabschnitte (55) hat, die einen Anschlag bei der Abwärtsbewegung des Schiebers bilden.

9. Schieber nach einem der Ansprüche 1 bis 8, in welchem der Schieber eine doppelte Symmetrie XZ und YZ hat.

10. Schieber nach einem der Ansprüche 1 bis 9, in welchem jede der flexiblen Laschen (53) eine Biegung aufweist, die weg von der Aktivierungstaste (54) orientiert ist.

## Claims

1. Locking slider (5), of molded plastic, suitable for use as a locking element inserted into a female connector (1) which comprises a body (10) with a bore of axis X, and a housing forming a slide (4) extending generally within a transverse plane YZ perpendicular to the axis, the housing (4) comprising two parallel lateral grooves (41,42) and the housing being open at least at one of its ends in the direction Z of the slide, forming a mouth (40) of the housing, the locking slider being adapted to be inserted into the housing (4) through the mouth (40),
the locking slider (5) comprising a locking plate (50) with a central opening (58) through which the male connector can pass, and an actuation pushbutton (54) integrally formed with the plate, configured to be pushed toward the axis to unlock the connection,
the locking slider comprising at least one flexible tab (53) integrally formed with the slider, the flexible tab returning the slider toward a first position referred to as the locking position, and able to flex to allow the plate to move toward a second position referred to as the unlocking position,
**characterized in that** the flexible tab (53) is projecting transversely to the plane of the locking plate on both sides of the locking plate so as to be adapted to press on each side of the mouth (40) of the housing along the direction transverse to the plane of the locking plate.

2. Slider according to claim 1, comprising two flexible tabs (53) arranged symmetrically with respect to the XZ plane.

3. Slider according to one of claims 1-2, wherein the flexible tabs are arranged under the actuation pushbutton (54), preferably interposed between the activation pushbutton and a top edge (58a) of the main opening (58).

4. Slider according to one of claims 1-3, comprising a retaining portion (51) that is part of the locking plate and opposite the actuation pushbutton, the retaining portion (51) comprising a ramp (51a) to facilitate movement of the slider towards the axially centered position during insertion of a male connector.

5. Slider according to claim 4, wherein the housing is asymmetrical with respect to the YZ plane so that the slider can only be inserted in the direction where the ramp is open towards the front in the direction of the male connector, and wherein a pin (6) projecting in the axial direction is provided in the lower portion of the slider, designed to engage with at least one notch (16) arranged in the front wall of the housing forming a slide.

6. Slider according to one of claims 1-5, wherein the locking plate comprises projections (52) for retaining the slider in the housing along the direction Z of the slide.

7. Slider according to one of claims 1-6, wherein the flexible tab (53) has a width along X that is 2 to 3 times the width of the slot along X, and the activation pushbutton has a width along X that is 2 to 5 times the width of the slot along X.

8. Slider according to one of claims 1-7, wherein the pushbutton (54) is curved with a radius of curvature close to that of the body of the female connector, and the pushbutton (54) comprises end portions (55) closer to the mouth which form an abutment to stop the downward movement of the slider.

9. Slider according to one of claims 1-8, wherein the slider has a double symmetry, with regard to XZ and YZ.

10. Slider according to one of claims 1-9, wherein each of the flexible tabs (53) has a curvature oriented away from the pushbutton (54).
